# EUROPÄISCHE PATENTSCHRIFT

(11) **EP 2 831 452 B1**
(45) Veröffentlichungstag und Bekanntmachung des Hinweises auf die Patenterteilung: **01.11.2017**
(21) Anmeldenummer: 13712526.6
(22) Anmeldetag: 22.03.2013
(51) Int. Cl.: F16D 55/226

(54) **SCHEIBENBREMSE**
DISK BRAKE
FREIN A DISQUE

(30) Priorität: 26.03.2012 DE 102012006111
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); STOEGER, Christian, 94474 Vilshofen (DE); PESCHEL, Michael, 82296 Schöngeising (DE)
(86) Internationale Anmeldenummer: PCT/EP2013/056023
(87) Internationale Veröffentlichungsnummer: WO 2013/143991

(56) Entgegenhaltungen:
- WO-A1-01/36838
- DE-A1- 19 745 775
- DE-A1-102007 001 213
- GB-A- 1 293 679
- US-A- 3 952 840

## Beschreibung

Die Erfindung betrifft eine Scheibenbremse, insbesondere für ein Nutzfahrzeug gemäß dem Oberbegriff des Anspruchs 1.

Bei einer Betätigung der Zuspanneinrichtung einer solchen Schiebesattel-Scheibenbremse wird zunächst der aktions- also zuspannseitige Bremsbelag gegen die Bremsscheibe gepresst und im weiteren Verlauf durch die entstehenden Reaktionskräfte der Bremssattel unter Mitnahme des gegenüberliegenden, reaktionsseitigen Bremsbelages an die andere Seite der Bremsscheibe gedrückt.

Um den Bremssattel nach einem Lösen der Zuspannung in eine Ausgangsposition zu bewegen und damit zu verhindern, dass die Bremsbeläge, wenngleich bremskraftfrei, schleifend an der Bremsscheibe anliegen, was zu einem Heißlaufen der Bremse sowie einem übermäßigen Abrieb des Reibbelages der Bremsbeläge führt, wird beispielsweise in der DE 10 2007 001 213 A1 der Einsatz einer Rückstelleinrichtung vorgeschlagen.

Bei der daraus bekannten Scheibenbremse ist zuspannseitig in einem der Führungsholme, über die der Bremssattel verschiebbar am Bremsträger gehalten ist, eine Rückstelleinrichtung vorgesehen, mit einem elastisch verformbaren Rückstellelement, konkret einer Druckfeder, mit der der Bremssattel selbsttätig in eine Ausgangsstellung gebracht wird.

Zur Erfüllung dieser sozusagen Multifunktionsaufgaben muss der Führungsholm bzw. muss das gebildete Gleitlager entsprechend modifiziert sein, was besondere fertigungstechnische Maßnahmen erfordert. Dies auch unter dem Aspekt, dass eine der beiden Lagerstellen, zu der der jeweilige Führungsholm gehört, als Loslager und die andere Lagerstelle als Festlager ausgebildet sind.

In der DE 22 30 949 A1 ist eine Scheibenbremse geoffenbart, bei der das Rückstellelement aus einer Blattfeder gebildet ist, mit der der Bremsbelag in entlasteter Stellung ebenfalls aus dem Berührungsbereich mit der Bremsscheibe gezogen wird.

Allerdings ändert sich über das Verschleißmaß des Bremsbelages die Kennlinie dieser Blattfeder sehr stark, so dass ein gleichbleibender Rückzug des Bremsbelages bzw. eine gleichbleibende Rückzugsstrecke nicht gewährleistet ist.

In der US 3 952 840 A ist eine Scheibenbremse thematisiert mit einer hydraulisch betätigbaren Zuspanneinrichtung, mit einem Hydraulikzylinder, an dem über Führungseinrichtungen ein Joch zur Bremsscheibe hin verschiebbar gelagert ist. Diese Führungseinrichtung fungiert als Rückstelleinrichtung, mit einer Elastomerhülse, in der ein Führungsbolzen gelagert ist.

Aus der GB 1 293 679 A ist eine Scheibenbremse bekannt, die gleichfalls hydraulisch betätigbar ist und bei der der Bremssattel als Schiebesattel ausgebildet auf Führungsholmen gelagert ist, wobei die Führungsholme Rückstelleinrichtungen in Form von Federn aufweisen.

Der Erfindung liegt die Aufgabe zugrunde, eine Scheibenbremse der gattungsgemäßen Art so weiterzuentwickeln, dass sie konstruktiv einfacher aufgebaut ist und ihre Standzeit, insbesondere die der Bremsbeläge und der Bremsscheibe erhöht wird.

Diese Aufgabe wird durch eine Scheibenbremse mit den Merkmalen des Anspruchs 1 gelöst.

Durch die Anordnung der Rückstelleinrichtung auf der der Zuspanneinrichtung gegenüberliegenden, dem reaktionsseitigen Bremsbelag zugewandten Seite wird eine wirksame, insbesondere automatische Rückstellung des Bremssattels erreicht bei gleichzeitig minimalstem Eingriff in die Systemsteifigkeit.

So ist die Lagerung der Rückstelleinrichtung im Bremssattel und im Bremsträger in einem Bereich möglich, der außerhalb hoher Biegebeanspruchungen beim Bremsen liegt. Zur Lagerung der Rückstelleinrichtung ist bei der Herstellung des Bremssattels, der üblicherweise aus Gusseisen besteht, ein Aufnahmeauge bereits angeformt. Bevorzugt sind zwei Rückstelleinrichtungen vorgesehen und zwar außerhalb des Überdeckungsbereiches des Bremsbelages. Damit werden die auftretenden Kräfte gleichmäßig aufgenommen.

Zum Ausgleich eines sich durch Verformung von Funktionsteilen wie Bremssattel, Zuspannmechanik oder dergleichen sowie eines bremsbedingten Abriebs der Bremsbeläge sich verändernden Lüftspiels, also des Abstands zwischen den Bremsbelägen und der Bremsscheibe, ist in die Rückstelleinrichtung eine Nachstellvorrichtung integriert, wodurch die genannten Veränderungen der Funktionsteile keinen Einfluss auf das Funktionsverhalten der Scheibenbremse insgesamt ausüben.

Eine bevorzugte Ausführungsvariante der Erfindung sieht einen fest mit dem Bremsträger verbundenen Bolzen vor.

Im Bremssattel ist eine Hülse fest positioniert, die wiederum in einem haubenartigen, in den Bremssattel eingepressten Deckel gehalten ist, wobei in der Hülse ein Rückstellelement sowie die Nachstellvorrichtung positioniert sind.

Das Rückstellelement besteht aus einer Druckfeder, vornehmlich einem Federpaket aus Tellerfedern, das sich einerseits an der Hülse, die damit ein Widerlager bildet und andererseits an einem die Nachstellvorrichtung bildenden Klemmring abstützt.

Die Hülse weist zwei in Verschieberichtung des Bremssattels abständig zueinander angeordnete Anschläge auf, zwischen denen der Klemmring angeordnet ist, wobei die Dicke des den Bolzen klemmend umschließenden Klemmrings um das vorgegebene Lüftspiel kleiner ist als der Abstand zwischen den beiden Anschlägen. Während eines Bremsvorgangs, bei dem, wie beschrieben, bei Wirksamwerden der Reaktionskräfte der Bremssattel unter Mitnahme des reaktionsseitigen Bremsbelages in Richtung der Zuspanneinrichtung verschoben wird, wird gleichzeitig die Druckfeder gespannt, d.h., zusammengedrückt, unter Überwindung des das Lüftspiel definierenden Spaltes zwischen dem einen Anschlag und dem Klemmring.

Nach einem Lösen der Bremse entspannt die Druckfeder und drückt die Hülse und damit den Bremssattel in eine Ausgangsstellung, in der der zweite Anschlag am Klemmring anliegt und der Spalt zwischen dem Klemmring und dem ersten Anschlag wiederhergestellt ist.

Mithilfe des Klemmringes erfolgt eine Verschleißnachstellung, wobei beim reaktionsbedingten Verschieben des Bremssattels die Druckfeder weitgehend zusammengefahren wird. Liegt der zugeordnete Bremsbelag verschleißbedingt dann noch nicht an der Bremsscheibe an, wird der Bremssattel unter Überwindung der durch den Klemmring auf den Bolzen einwirkenden Reibkräfte noch weiter verschoben, wobei eine Relativbewegung des Klemmrings und damit des Bremssattels zum Bolzen in Richtung der Bremsscheibe erfolgt und sich der Abstand des Bremssattels zur Bremsscheibe verringert.

Nach einem Lösen der Bremse wird der nun um das Maß des Verschleißes bzw. der Bauteilverformung gegenüber dem Bolzen verschobene Bremssattel wieder in seine Endstellung gedrückt, wobei dieser Verschiebeweg nach wie vor durch den Federweg der Druckfeder bestimmt wird, der dem Soll-Lüftspiel entspricht.

Die Haltekraft des Klemmrings wird durch eine Radialverspannung erzeugt, wozu der Klemmring, der im Übrigen mit radialem Untermaß in der Hülse gehalten ist, durchgehend geschlitzt ist. Vor einer Montage, also vor einem Aufstecken des Klemmrings auf den Bolzen, ist der Innendurchmesser des Klemmrings kleiner als der Außendurchmesser des Bolzens. Nach einem Aufschieben des Klemmrings wird durch die innewohnenden Rückstellkräfte die notwendige Vorspannungs -, d.h. Klemmkraft erzeugt.

Die Hülse ist vorzugsweise als Tiefziehteil ausgebildet, wobei die Anschläge zur Verschiebebegrenzung des Bremssattels in Korrespondenz mit dem Klemmring durch Eindellen der Hülse hergestellt sind.

Zur Montage des Klemmrings wird zunächst ein Anschlag durch Eindrücken der Hülse hergestellt, danach der Klemmring eingesetzt und im Folgenden der zweite Anschlag, ebenfalls durch Eindrücken der Mantelfläche gebildet.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer teilweise geschnittenen Draufsicht
- Figur 2: einen Teilschnitt durch die Scheibenbremse gemäß der Linie II-II in Figur 1
- Figur 3: ein Rückstellelement der Scheibenbremse in einer Explosivdarstellung
- Figuren 4 und 5: jeweils eine Einzelheit der Rückstelleinrichtung in einer perspektivischen Ansicht.

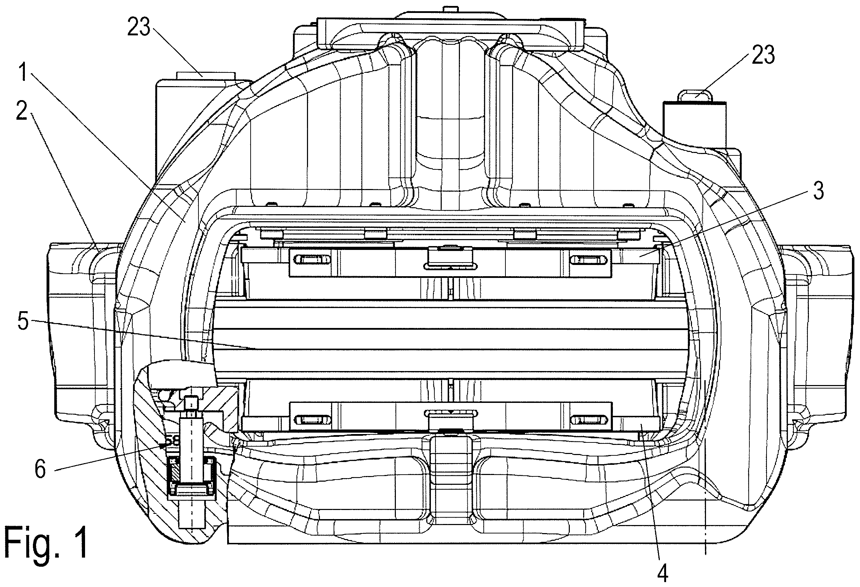

In der Figur 1 ist eine Scheibenbremse, insbesondere für ein Nutzfahrzeug, dargestellt, mit einem eine Bremsscheibe 5 übergreifenden, als Schiebesattel ausgebildeten Bremssattel 1, der an einem ortsfesten Bremsträger 2 befestigt ist. Im Bremssattel 1 ist eine Zuspanneinrichtung 22 angeordnet, mit der bei einer Bremsung ein zugeordneter, aktionsseitiger Bremsbelag 3 gegen die Bremsscheibe 5 pressbar ist.

Bei einer Kontaktierung des Bremsbelages 3 wird aufgrund der auftretenden Reaktionskräfte der Bremssattel 1 unter Mitnahme eines reaktionsseitigen Bremsbelages 4 in Richtung der Zuspanneinrichtung 22 verschoben, wozu der Bremssattel 1 an mit dem Bremsträger 2 verbundenen Führungsholmen 23 verschiebbar gelagert ist.

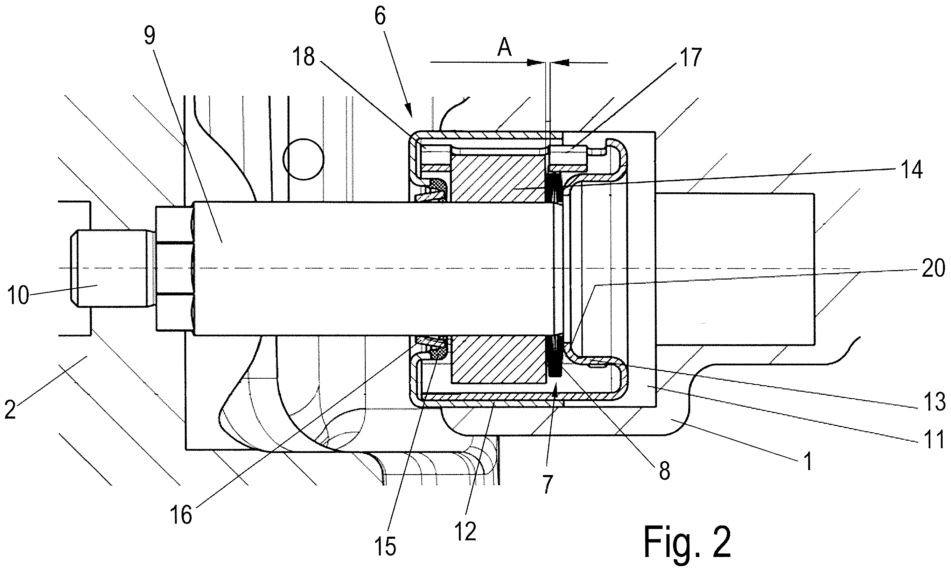

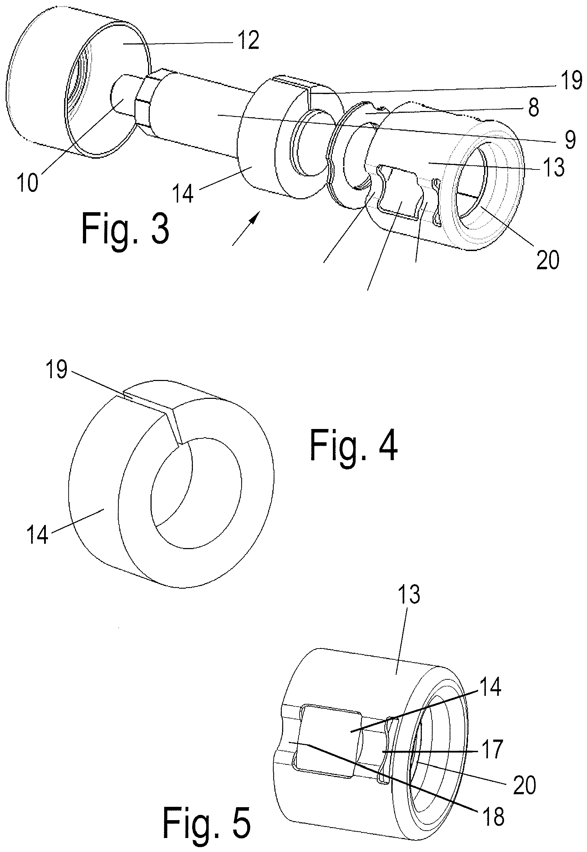

Erfindungsgemäß ist auf der der Zuspanneinrichtung 3 gegenüberliegenden Seite der Bremsscheibe 5 im Bremssattel 1 sowie im Bremsträger 2 mindestens eine Rückstelleinrichtung 6 gehalten, die als Einzelheit in den Figuren 2 und 3 dargestellt ist. Bevorzugt sind zwei Rückstelleinrichtungen 6, jeweils etwa im Bereich der Führungsholme 23 angeordnet.

Diese Rückstelleinrichtung 6 weist einen Bolzen 9 auf, an dessen einem Ende ein Gewindezapfen 10 angeschlossen ist, der in den Bremsträger 2 eingeschraubt ist.

Die Dichtung 15 ist so ausgeführt, dass radiale Bewegungen des Bolzens 9 bzw. radiale Toleranzen ausgeglichen werden können.

Im Deckel 12 ist eine in der Figur 5 als Einzelheit dargestellte Hülse 13 angeordnet, mit zwei abständig zueinander verlaufenden, durch Umformen in radialer Richtung gebildeten Anschlägen 17, 18, zwischen denen ein auf dem Bolzen 9 gehaltener Klemmring 14 angeordnet ist, dessen Bauhöhe kleiner ist als der Abstand der beiden Anschläge 17, 18 zueinander. Dadurch wird ein Spaltmaß A gebildet, das einem Lüftspiel entspricht, d.h. dem Abstand zwischen dem Bremsbelag 4 und der Bremsscheibe 5 in ungebremster Stellung.

Zwischen dem Klemmring 14 und einem eingezogenen Boden 20 der Hülse 13 ist eine Druckfeder 8 angeordnet, die im vorliegenden Beispiel aus zwei aneinander liegenden Tellerfedern besteht, deren konkave Seiten einander zugewandt sind, wobei sich eine Tellerfeder am Klemmring 14 und die andere am Boden 20 abstützt.

In der Figur 2 ist eine ungebremste Situation gezeigt, d.h. die Scheibenbremse befindet sich in einer Nichtfunktionsstellung.

Bei einer Bremsung wird der Bremssattel 1 durch die auftretenden Reaktionskräfte in Richtung der Bremsscheibe 5 verschoben, gleichbedeutend mit der Verschiebung in Richtung des Bremsträgers 2, unter Mitnahme des Deckels 12 und der damit fest verbundenen Hülse 13.

Bei Verschiebung des Bremssattels 1 wird durch den Boden 20 der Hülse 13 die Druckfeder 8 gestaucht, wobei der Klemmring 14, der durch Reibschluss am Bolzen 9 gehalten ist, ein Widerlager für die Druckfeder 8 bildet. Dabei ist die Klemmkraft, mit der der Klemmring 14 am Bolzen 9 anliegt, größer als die Federkraft der Druckfeder 8.

Der das Lüftspiel wiedergebende Spalt A wird dabei überwunden, bis der Anschlag 17 am Klemmring 14 anliegt, wobei der Federweg der Druckfeder 8 größer sein muss als das Spaltmaß A.

Der Klemmring 14 bildet eine Nachstelleinrichtung zum Ausgleich eines sich verändernden Lüftspiels. Sollte das sich verschleißbedingt sowie durch die Verformung des Sattelrückens und der Beläge vergrößerte Lüftspiel vorliegen, wird der Bremssattel 1 über das Spaltmaß A hinaus verschoben, bis der reaktionsseitige Bremsbelag 4 an der Bremsscheibe 5 anliegt.

Dabei wird durch den Anschlag 17 der Klemmring 14 unter Überwindung der auf den Bolzen 9 wirksamen Klemmkraft in eine veränderte Ausgangsposition verschoben.

Beim Lösen der Bremse entspannt sich die Druckfeder 8 und drückt den Bremssattel 1 in eine Nichtfunktionsstellung, wobei die gegenüber dem Bremssattel 1 ortsfeste Hülse sich relativ zum Klemmring 14 verschiebt, bis der in der Figur 2 linksseitige Anschlag 18 zur Anlage am Klemmring 14 kommt und der Spalt A sich einstellt.

In der Figur 3 ist die Rückstelleinrichtung 6 in einer Explosionsansicht dargestellt. Darin ist zu erkennen, dass die Hülse 13 zur Bildung der Anschläge 17, 18 ein ausgestanztes Fenster aufweist, deren zwei in Achsrichtung sich gegenüberliegende Ränder durch Umformen in radialer Richtung die Anschläge 17, 18 bilden. In der Figur 5 ist die Hülse 13 mit eingesetztem Klemmring 14 zu erkennen, dessen Außendurchmesser kleiner ist als der lichte Durchmesser der Hülse 13 zum Ausgleich von Toleranzen.

Zur Erzeugung der Klemmkraft, mit der der Klemmring 14 am Bolzen 9 gehalten ist, ist ein durchgehender Schlitz 19 in den Klemmring 14 eingebracht und der lichte Durchmesser des Klemmrings 14 kleiner als der Außendurchmesser des Bolzens 9. Nach einem Aufschieben des Klemmrings 14 auf den Bolzen 9 ist der Klemmring 14 aufgrund der wirksamen Rückstellkräfte fest mit dem Bolzen 9 verspannt.

### Bezugszeichenliste

1 Bremssattel
2 Bremsträger
3 Bremsbelag
4 Bremsbelag
5 Bremsscheibe
6 Rückstelleinrichtung
7 Rückstellelement
8 Druckfeder
9 Bolzen
10 Gewindezapfen
11 Ausnehmung
12 Deckel
13 Hülse
14 Klemmring
15 Dichtung
16 Abstreifer
17 erster Anschlag
18 zweiter Anschlag
19 Schlitz
20 Ringboden
21 Fenster
22 Zuspanneinrichtung
23 Führungsholm

## Patentansprüche

1. Scheibenbremse, insbesondere für ein Nutzfahrzeug, mit einem eine Bremsscheibe (5) übergreifenden, als Schiebesattel ausgebildeten Bremssattel (1), der an einem ortsfesten Bremsträger (2) mittels damit verbundener Führungsholme (23) verschiebbar befestigt ist, einer im Bremssattel (1) angeordneten Zuspanneinrichtung, mit der bei einer Bremsung ein zugeordneter, aktionsseitiger Bremsbelag (3) gegen die Bremsscheibe (5) pressbar ist, sowie mindestens einer ein Rückstellelement aufweisenden Rückstelleinrichtung (6), mit der der Bremssattel (1) nach einem bremsbedingten Verschieben und Lösen der Bremse in eine Ausgangsstellung bringbar ist, **dadurch gekennzeichnet, dass** die Rückstelleinrichtung (6) auf der der Zuspanneinrichtung gegenüberliegenden Seite der Bremsscheibe (5) sowohl im Bremssattel (1) in einem angeformten Aufnahmeauge wie auch im Bremsträger (2) mit einem damit verbundenen Bolzen (9) gehalten ist.

2. Scheibenbremse nach Anspruch 1, **dadurch gekennzeichnet, dass** in der Rückstelleinrichtung (6) eine Nachstellvorrichtung integriert ist.

3. Scheibenbremse nach Anspruch 1 oder 2, **dadurch gekennzeichnet, dass** das Rückstellelement aus einer Druckfeder (8), vorzugsweise in Form zumindest einer Tellerfeder besteht.

4. Scheibenbremse nach einem der vorhergehenden Ansprüche, **dadurch gekennzeichnet, dass** in einer Ausnehmung (11) des Bremssattels (1) ein topfartiger Deckel (12) befestigt ist, mit dem eine Hülse (13), unter Bildung einer Innenkammer, fest verbunden ist.

5. Scheibenbremse nach Anspruch 4, **dadurch gekennzeichnet, dass** in der Hülse (13) ein kraftschlüssig am Bolzen (9) gehaltener Klemmring (14) positioniert ist, der ein Widerlager für die Druckfeder (8) bildet, die sich andererseits an einem Boden (20) der Hülse (13) abstützt.

6. Scheibenbremse nach einem der Ansprüche 4 oder 5, **dadurch gekennzeichnet, dass** die Hülse (13) zwei abständig zueinander angeordnete Anschläge (17, 18) aufweist zum axialen Anschlag des Klemmrings (14), wobei die Bauhöhe des Klemmrings (14) kleiner ist als der Abstand der Anschläge (17, 18) und das gebildete Differenzmaß einem vorgegebenen Lüftspiel entspricht.

7. Scheibenbremse nach einem der Ansprüche 5 oder 6, **dadurch gekennzeichnet, dass** die axiale Klemmkraft des Klemmrings (14), mit der dieser am Bolzen (9) gehalten ist, größer ist als die Federkraft der Druckfeder (8).

8. Scheibenbremse nach einem der Ansprüche 4 bis 7, **dadurch gekennzeichnet, dass** der Deckel (12) einen konzentrischen Dichtring (15) aufweist, an den sich ein am Bolzen (9) anliegender Abstreifer (16) anschließt.

9. Scheibenbremse nach einem der Ansprüche 3 bis 8, **dadurch gekennzeichnet, dass** der Federweg der Druckfeder (8) größer ist als das Maß des Lüftspiels.

10. Scheibenbremse nach einem der Ansprüche 5 bis 9, **dadurch gekennzeichnet, dass** der Außendurchmesser des Klemmrings (14) kleiner ist als der lichte Durchmesser der Hülse (13).

## Claims

1. Disc brake, in particular for a commercial vehicle, comprising a brake calliper (1), which encompasses a brake disc (5) and is designed as a sliding calliper, the brake calliper being displaceably secured to a fixed adapter (2) by means of guide bars (23) connected thereto, further comprising an application device (22) located in the brake calliper (1), by means of which an associated, action-side brake pad (3) can be pressed against the brake disc (5) during braking, and further comprising at least one return device (6) having a return element, by means of which return device the brake calliper (1) can be brought into an initial position after movement due to braking and release of the brake, **characterised in that** the return device (6) is held both in the brake calliper (1) and in the adapter (2) on the opposite side of the brake disc (5) from the application device (22).

2. Disc brake according to claim 1, **characterised in that** an adjustment device is integrated into the return device (6).

3. Disc brake according to claim 1 or 2, **characterised in that** the return element consists of a compression spring (8), preferably in the form of at least one disc spring.

4. Disc brake according to any of the preceding claims, **characterised in that** a pot-type cover (12), to which a sleeve (13) is permanently connected to form an inner chamber, is secured in a recess (11) in the brake calliper (1).

5. Disc brake according to claim 4, **characterised in that** a clamping ring (14) held non-positively on the bolt (9) is positioned in the sleeve (13), said clamping ring forming an abutment for the compression spring (8), which is supported on the other side on a base (20) of the sleeve (13).

6. Disc brake according to claim 4 or 5, **characterised in that** the sleeve (13) has two stops (17, 18) arranged with a spacing relative to one another to provide an axial stop for the clamping ring (14), wherein the overall height of the clamping ring (14) is less than the spacing of the stops (17, 18) and the differential dimension formed corresponds to a predetermined clearance.

7. Disc brake according to claim 5 or 6, **characterised in that** the axial clamping force of the clamping ring (14), by means of which it is held on the bolt (9), is greater than the spring force of the compression spring (8).

8. Disc brake according to any of claims 4 to 7, **characterised in that** the cover (12) has a concentric sealing ring (15), adjoining which there is a wiper (16) resting on the bolt (9).

9. Disc brake according to any of claims 3 to 8, **characterised in that** the spring travel of the compression spring (8) is greater than the size of the clearance.

10. Disc brake according to any of claims 3 to 9, **characterised in that** the outside diameter of the clamping ring (14) is less than the clear diameter of the sleeve (13).

## Revendications

1. Frein à disque, notamment pour un véhicule utilitaire, comprenant un étrier (1) de frein, qui enjambe un disque (5) de frein, qui est constitué en étrier coulissant et qui est fixé de manière à pouvoir coulisser sur un porte-frein (2) à poste fixe au moyen de longerons (23) de guidage, qui y sont reliés, à un dispositif de serrage, qui est disposé dans l'étrier (1) de frein et par lequel, lors d'un freinage, une garniture (3) de frein associée du côté action peut être pressée sur le disque (5) de frein, ainsi qu'au moins un dispositif (6) de rappel, qui a un élément de rappel et par lequel l'étrier (1) de frein peut, après un déplacement dû au freinage et un desserrage du frein, être ramené dans une position initiale, **caractérisé en ce que** le dispositif (6) de rappel est maintenu, du côté opposé au dispositif de serrage, tant dans l'étrier (1) de frein dans un oeillet de réception qui y est formé, qu'également dans le porte-frein (2), par un axe (9) qui y est relié.

2. Frein à disque suivant la revendication 1, **caractérisé en ce qu'**au dispositif (6) de rappel est intégré un dispositif de rattrapage.

3. Frein à disque suivant la revendication 1 ou 2, **caractérisé en ce que** l'élément de rappel est constitué d'un ressort (8) de compression, de préférence sous la forme d'au moins un ressort à disque.

4. Frein à disque suivant l'une des revendications précédentes, **caractérisé en ce que**, dans un évidement (11) de l'étrier (1) de frein, est fixé un couvercle (12) de type en pot, auquel un manchon (13) est relié fixement avec formation d'une chambre intérieure.

5. Frein à disque suivant la revendication 4, **caractérisé en ce que**, dans le manchon (13), est placée à coopération de force une bague (14) de serrage maintenue sur l'axe (9) et formant une butée pour le ressort (8) de compression, lequel s'appuie de l'autre côté sur un fond (20) du manchon (13).

6. Frein à disque suivant l'une des revendications 4 ou 5, **caractérisé en ce que** le manchon (13) a deux butées (17, 18) à distance l'une de l'autre pour la venue en butée axiale de la bague (14) de serrage, la hauteur de construction de la bague (14) de serrage étant plus petite que la distance entre les butées (17, 18) et la différence formée correspond à un jeu de garnitures donné à l'avance.

7. Frein à disque suivant l'une des revendications 5 ou 6, **caractérisé en ce que** la force de serrage axiale de la bague (14) de serrage, par laquelle celle-ci est maintenue sur l'axe (9), est plus grande que la force du ressort (8) de compression.

8. Frein à disque suivant l'une des revendications 4 à 7, **caractérisé en ce que** le couvercle (12) a une bague (15) d'étanchéité concentrique à laquelle s'applique un racleur (16) s'appliquant à l'axe (9).

9. Frein à disque suivant l'une des revendications 3 à 8, **caractérisé en ce que** l'élasticité du ressort (8) de compression est plus grande que la dimension du jeu de garnitures.

10. Frein à disque suivant l'une des revendications 5 à 9, **caractérisé en ce que** le diamètre extérieur de la bague (14) de serrage est plus petit que le diamètre intérieur du manchon (13).
